# FASCICULE DE BREVET EUROPEEN

(11) **EP 1 940 983 B1**
(45) Date de publication et mention de la délivrance du brevet: **14.06.2017**
(21) Numéro de dépôt: 06831306.3
(22) Date de dépôt: 26.10.2006
(51) Int. Cl.: C09D 103/04, A61K 9/28

(54) **AGENT D'ENROBAGE**
BESCHICHTUNGSMITTEL
COATING AGENT

(30) Priorité: 28.10.2005 FR 0553294
(43) Date de publication de la demande: 09.07.2008
(73) Titulaire: Paris, Laurence, 03600 Commentry (FR); CARE & PHARMA PERSPECTIVES SA, 1110 Morges (CH)
(72) Inventeur: PARIS, Laurence, 03390 Montmarault (FR); VAURES, Frédéric, 91700 Sainte Geneviève des Bois (FR)
(74) Mandataire: Richebourg, Michel François
(86) Numéro de dépôt international: PCT/FR2006/051114
(87) Numéro de publication internationale: WO 2007/048982

(56) Documents cités:
- FR-A- 2 862 654
- US-A- 4 026 986
- US-A1- 2004 069 300

## Description

### DOMAINE D'APPLICATION

La présente invention a trait au domaine pharmaceutique, cosmétique, nutraceutique et alimentaire et plus particulièrement à celui des compositions prêtes à l'emploi destinées à l'enrobage des comprimés, gélules, capsules et autres formes solides ou semi solides couramment utilisées dans ces différents domaines d'applications.

### DESCRIPTION DE L'ART ANTERIEUR

Certaines formes solides ou semi solides destinées à être administrées soit par voie orale, soit par voie parentérale, ou autre, nécessitent d'être isolées du milieu environnemental dans le but :
- d'éviter une dégradation dans le temps des composants actifs vis-à-vis de la lumière, de l'oxygène de l'air et de l'humidité,
- de masquer un goût désagréable lors de l'absorption du produit,
- de masquer une odeur,
- etc.....

Ces formes solides ou semi solides sont généralement des comprimés de toutes formes, des gélules, des capsules molles, des microgranules, des granulés, des pâtes (gommes à mâcher), etc....

L'isolement de ces formes vis-à-vis de l'environnement extérieur est obtenu par leur enrobage ou pelliculage à l'aide de différents ingrédients.

On entend par « enrobage ou pelliculage », la formation d'une pellicule continue à la surface de la forme solide ou semi solide.

Ce dépôt se fait en général par pulvérisation d'ingrédients spécifiques mis en solution ou suspension dans un solvant aqueux ou organique.

Ces substances ont la particularité d'être des agents filmogènes.

On entend par « agent filmogène », des substances qui, mises en solution, donnent naissance à un film continu à la surface d'une forme solide ou semi solide, par évaporation du solvant sous l'effet d'un phénomène thermique.

Dans la majorité des cas, le phénomène thermique est une augmentation de température de l'atmosphère environnante. L'épaisseur desdits films déposés à la surface du solide, est de l'ordre du micron et dépend du dépôt effectué sur le support.

Les agents filmogènes couramment utilisés sont :
- des dérivés d'origine naturelle tel que :
   * des celluloses : l'hydroxypropylméthylcellulose, l'hydroxypropylcellulose, éthylcellulose, etc...
   * des amidons : les maltodextrines, polydextroses, etc..
- des polymères synthétiques tels que les polyvinylalcools, les polyvinylacétophtalates, les résines métacryliques, etc....

Ces différentes substances peuvent être utilisées seules en solution ou dispersion aqueuse ou organique ou en mélange avec d'autres ingrédients dans le but de renforcer les propriétés des films formés.

Ainsi aux agents filmogènes sont associés :
- des plastifiants dans le but de donner une certaine élasticité au film évitant ainsi un craquèlement par rétraction du film lors de son séchage,
- des charges qui ont pour but d'augmenter la concentration en matière solide dans le film afin de diminuer le temps de séchage de ce dernier,
- des opacifiants pour protéger les noyaux de l'action de la lumière,
- des colorants dans le but d'améliorer l'aspect final du comprimé,
- etc...

Ces différents composés sont introduits dans les préparations prêtes à l'emploi à des taux très variables en fonction de l'objectif recherché.

Ainsi un certain nombre de brevets ont été développés dans le cas de mélanges prêts à l'emploi en vue de faciliter l'étape de préparation de la solution ou suspension d'enrobage.

Parmi ceux-ci nous pouvons citer les brevets de Colorcon :
- le brevet américain US4704295 faisant état d'un film d'enrobage à base de polyvinylacétophtalate,
- le brevet européen EP 0551700 protégeant l'utilisation de la cellulose et du lactose dans des applications filmogènes dans le cas des comprimés destinés au domaine pharmaceutique et en confiserie,
- le brevet Américain US 4828841 utilisant les maltodextrines comme agent filmogène en association avec un dérivé d'alginate,
- le brevet Américain US4802924 basé sur l'utilisation de polydextroses en association avec un dérivé d'alginate dans le but de réduire le taux de calories que peut apporter un pelliculage à base de sucre très souvent utilisé en confiserie.

De même, la société Seppic a protégé un certain nombre de compositions filmogènes prêtes à l'emploi dont l'ingrédient principal est l'hydroxypropylméthylcellulose:
- brevets Américains US5393333, US4665645, US4576646,
- brevets Européens EP0523120, EP0133827.

Ces brevets ont été déposés pour des applications pharmaceutiques, pelliculages de comprimés et autres formes solides pharmaceutiques ou diététiques, mais aussi pour des applications agronomiques, protection des graines avant germination.

L'enrobage de formes solides ou semi solides de quelle que nature que ce soit et en particulier dans le domaine pharmaceutique, nutraceutique et cosmétique reste une opération longue est délicate.

En effet, cette opération met en ouvre du matériel sophistiqué telles que des turbines d'enrobage munies de systèmes de chauffage et de ventilation performants pour Les conditions opératoires sont telles que le débit de pulvérisation et la température de chauffage doivent éviter un séchage prématuré de la solution avant de se déposer sur le support solide.

Les températures de travail sont de l'ordre de 35 à 45°C.

La durée de cette opération est fonction de la teneur devant être déposée sur le support solide et du temps d'évaporation du solvant.

Dans la majorité des cas le solvant est constitué par l'eau.

Par conséquent plus la teneur en eau de la solution ou de la suspension d'enrobage est élevée, plus le temps d'évaporation sera long.

Dans le domaine pharmaceutique et nutraceutique, plus le temps d'exposition des produits à la chaleur est long plus le risque de dégradation des principes actifs est important.

Cette opération peut être réduite si les solutions ou suspensions d'enrobage sont fortement concentrées en matières solides, la quantité de solvant à évaporer étant plus faible.
Or, dans la majorité des cas tous les brevets cités ci-dessus ainsi que dans les spécifications des fournisseurs des préparations d'enrobage prêtes à l'emploi, il est préconisé une utilisation de ces dites préparations à la concentration en matières solides dans la suspension ou la solution de pelliculage de l'ordre de 10 à 20%, préférentiellement entre 12 et 15% exprimé en masse par rapport à la masse totale de la préparation.
<I> Par conséquent, près de 85% d'eau doivent être évaporés dans un laps de temps relativement cours imposant un chauffage relativement court et des systèmes de ventilation au sein de la turbine très performants. La température du lit de comprimés se situe généralement entre 35 et 45°C.
<I> "Tel est le cas d'un produit d'enrobage développé par la Société Roquette et faisant l'objet d'un brevet Français FR2862654. En effet, la Société Roquette spécialisée dans les amidons de pomme de terre et autres a déposé ce brevet dans le domaine de l'enrobage dont l'agent filmogène est constitué par de l'amidon de pois modifié, hydroxypropyl amidon de pois.

Cet amidon modifié a la particularité d'être soluble à froid sous forme prégélatinisée. Cependant, cet amidon riche en amylose a tendance à épaissir considérablement le milieu, réduisant ainsi sa concentration en milieu aqueux. De ce fait, les concentrations en matières solides dans les solutions de pelliculage proposées par Roquette ne dépassent pas 20% et dans certains cas, il est nécessaire de chauffer la préparation. Ainsi, les teneurs en eau dans les préparations de Roquette sont quasi identiques (80% d'eau) à celles des solutions de pelliculages contenant des dérivés cellulosiques. » Pour résoudre un tel problème, l'augmentation de la concentration en matières solides dans la phase aqueuse ou organique serait judicieuse. Mais deux problèmes se posent en fonction de la nature de l'agent filmogène.

En effet, dans le cas des agents filmogènes d'origine naturelle modifiés ou non ou synthétique, tels que les dérivés cellulosiques, la concentration en matière solide dans le milieu est limitée par la viscosité de ce dernier. Les suspensions prêtes à l'emploi à la concentration de 12 à 15 % présentent une viscosité de l'ordre de 1000 cPs, viscosité maximale admissible pour les systèmes de pulvérisation utilisés classiquement pour ce type de préparation.

Dans le cas des agents filmogènes d'origine synthétique telles que les résines métacryliques, des solutions ou dispersions trop concentrées en matières solides provoquent l'agglomération des comprimés au sein de la turbine car ces dites solutions ou suspensions présentent des propriétés adhésives à fortes concentrations.

Ainsi, après une étude approfondie de la littérature dans le domaine des compositions de pelliculage prêtes à l'emploi, il n'a pas été permis de mettre en évidence une solution efficace pour réduire le temps de pelliculage, ceci en raison du temps nécessaire à l'évaporation d'une grande quantité de solvant qui, dans la majorité des cas, est de l'eau.

### DESCRIPTION DE L'INVENTION

Partant de cet état de fait et pour y remédier, l'invention propose des compositions filmogènes solides prêtes à l'emploi destinées à la réalisation de solutions ou dispersions de pelliculage pour formes solides ou semi solides remarquables en ce que la viscosité de ces solutions ou dispersions après reconstitution à froid, est inférieure à 1000 Centipoises, pour une concentration en matières solides supérieure à 20%, cette viscosité étant obtenue par l'utilisation d'agents filmogènes d'origine naturelle, solubles à froid et de faible viscosité en milieu aqueux pour de hautes concentrations, l'élasticité des films étant obtenue par l'addition de plastifiants lipophiles.

Ainsi, la présente invention a pour but de développer des compositions filmogènes qui, après pulvérisation de solutions ou dispersions hautement concentrées en ces dites compositions, permettent d'obtenir des films d'enrobage similaires en propriétés physiques à ceux obtenus à partir de solutions ou dispersions cellulosiques de faibles concentrations, à savoir :
- une très bonne adhérence au support solide,
- une élasticité évitant tout craquèlement par rétractation ou dilatation du film lors du process et de la conservation du solide pelliculé,
- une bonne désagrégation en milieu aqueux neutre, acide et basique.

Cette invention est applicable aussi bien à des compositions filmogènes destinées à protéger le support de la lumière, de l'humidité environnante, de l'action oxydante de l'air, à masquer un goût et/ou une odeur, en fonction des additifs incorporés à ces dites compositions. Cette invention est basée sur le fait que certaines compositions filmogènes solubilisées ou dispersées à froid dans le solvant de pulvérisation, donnent naissance à des solutions ou dispersions de faible viscosité même pour des concentrations élevées contrairement aux celluloses telles que les hydroxypropylméthylcelluloses.

Ainsi, même à fortes concentrations, les solutions ou dispersions ainsi obtenues à froid restent pulvérisables ou sprayables, sans risque d'obturer le système de pulvérisation. Le dépôt à la surface du support étant plus important dans le même laps de temps qu'avec des solutions peu concentrées, le temps de travail s'en trouve ainsi réduit limitant de ce fait les risques de dégradation de certains principes actifs.

On entend par « pulvérisable ou sprayable » la possibilité par administration d'air sous pression à ces dites solutions ou dispersions, de former un nuage de fines gouttelettes de liquides. Ces gouttelettes sont caractérisées en ce que leur taille et leur mouillabilité sont telles qu'elles permettent la formation d'un film très lisse et homogène à la surface du support solide, l'évaporation du solvant en étant de ce fait facilitée. Les substances filmogènes mises en oeuvre sont des matières premières d'origine naturelle très utilisées dans le domaine pharmaceutique, cosmétique et diététique.

### DESCRIPTION APPROFONDIE

L'obtention desdites compositions filmogènes prêtes à l'emploi faisant l'objet de la présente invention font appel à des substances dites agents filmogènes, qui en solution aqueuse ou organique conduisent, après solubilisation à froid, à des préparations de faibles viscosités pour des concentrations élevées en matières solides.

Ces substances peuvent être utilisées seules, à la concentration de 25% et plus en solution aqueuse, donnant naissance après pulvérisation à des films présentant une certaine résistance, dans lesquels des actifs peuvent être dissous ou dispersés.

On entend par « actifs » des substances qui confèrent aux films issus de ces dites compositions des propriétés spécifiques telle qu'une protection accrue à l'humidité, une résistance au sucs gastriques, une perméabilité modulée, etc.....

Ces mêmes substances peuvent être utilisées en association avec d'autres excipients dits de structuration, ayant pour but de renforcer la solidité dudit film.

En association avec les agents de structuration et/ou les actifs, les agents filmogènes desdites compositions jouent ainsi le rôle de « liant ».

On entend par « liant » des substances agissant comme des ciments entre les particules d'un réseau dans le but de consolider une structure plus ou moins solide.

Ainsi, ces substances filmogènes de par leur propriété liante assurent lors de la pulvérisation des solutions de pelliculage, la dispersion homogène des agents structurants et/ou des actifs par leur emprisonnement dans le réseau visqueux desdites solutions.

De ce fait, la répartition homogène de ces différents constituants à la surface du solide, confère au film ainsi formé, une solidité accrue ou des propriétés spécifiques optimisées, dépendant de la concentration desdits constituants.

Les agents filmogènes permettant d'obtenir lesdites compositions prêtes à l'emploi et jouant le rôle de « liant », appartiennent à la classe des polymères naturels, les polysaccharides.

Les polysaccharides retenus dans le cadre de cette invention sont les amidons.

Les amidons sont des polymères de glucose. Ces molécules sont enchaînées soit de façon :
- linéaire : amylose
- ramifiée : amylopectine

Généralement, les amidons dits natifs, amidons tels qu'ils sont extraits des plantes, sont un mélange des ces deux structures.

En fonction de leur provenance, la proportion de ces deux polymères varie telle que cela est montré dans le tableau ci-après.

| | **AMYLOSE %** | **AMYLOPECTIN %** |
|---|---|---|
| **Maïs** | 25% | 75% |
| **Maïs cireux** | 1-5% | 95-99% |
| **Blé** | 25% | 75% |
| **Pomme de terre** | 20% | 80% |
| **Tapioca** | 17% | 83% |
| **Maïs riche en amylose** | 50-70% | 30-50% |

Tels quels, les amidons natifs ne présentent pas de propriétés filmogènes lorsqu'ils sont dispersés dans l'eau froide. Ils restent à l'état particulaire.

Ce n'est qu'en chauffant les grains d'amidons en présence d'eau, que leur propriété épaississante est exaltée. C'est l'étape de gélification des amidons. Il y a éclatement desdits grains permettant ainsi une hydratation complète du polymère et la formation d'une solution colloïdale. Cette hydratation se concrétise sur le plan physique par une augmentation de la viscosité de la solution qui, par refroidissement, donne naissance au cours du temps à un gel. C'est le phénomène de rétrogradation.

Cependant, ces gels sont peu solides et relarguent l'eau du réseau par synérèse.

Ces solutions sont généralement pulvérisées à chaud sur le support solide. Les films obtenus dans ces conditions sont cassants et rarement transparents.

La solidité de ces films dépend de la concentration en amylose dans l'amidon retenu. Des amidons riches en amylose sont plus aptes à former des films solides que les amidons riches en amylopectine, mais la viscosité de telles solutions est très importante même à faibles concentrations.

Un certain nombre de brevets ont été pris dans ce domaine tel que le brevet WO0200205 qui met en oeuvre un amidon acétyle prégélatinisé à haute teneur en amylose. Les solutions de pulvérisation nécessitent d'être préalablement chauffées entre 50 et 60°C et la concentration de ces dernières n'est pas supérieure à 25%. Le brevet d'Upjohn GB 810,306 met en oeuvre un acétatophtalate d'amylose dont la teneur en solution est élevée. Ce type d'amidon conduit à la formation de films gastro-résistants, non solubles en milieu acide.

D'autre part, les solutions d'amidons natifs présentent des viscosités très élevées pour de faibles concentrations.

En fonction du type d'amidon, les températures de gélification, l'aspect des films et le phénomène de rétrogradation varient. Ces données sont présentées dans le tableau ci-après.

| **TYPE D'AMIDON** | **TEMP. DE GELIFICATION** | **ASPECT DE LA PATE** | | | **RETROGRADATION** |
|---|---|---|---|---|---|
| | | **Viscosité** | **Texture** | **Aspect du film** | |
| **Maïs** | 62-80°C | Moyenne | Courte | Opaque | Forte |
| **Maïs cireux** | 63-72°C | Moyenne | Longue | Moyennement claire | Faible |
| **Blé** | 52-85°C | Faible | Courte | Translucide | Forte |
| **Pomme de terre** | 58-65°C | Haute | Longue | Transparent | Moyenne |
| **Tapioca** | 60-65°C | Haute | Longue | Très transparent | Faible |

Ainsi, tels quels, les amidons natifs ne peuvent faire l'objet de compositions filmogènes hautement concentrées pour l'enrobage de formes solides pour le domaine de la pharmacie, de la cosmétique et du nutraceutique en raison:
- de la nécessité de chauffer les solutions de manière à permettre aux grains d'amidons de s'hydrater et développer leur propriétés filmogènes. Les températures mises en oeuvre sont supérieures aux températures de gélification,
- d'une viscosité élevée pour de faibles concentrations mises en jeu.

Cependant, le domaine alimentaire confronté aux mêmes problèmes cités précédemment a permis de développer un certain nombre d'amidons dits amidons modifiés pour résoudre ces derniers.

Les modifications subies par les amidons natifs sont de plusieurs natures.

Elles peuvent être :
- physiques,
- chimiques,
- enzymatiques.

Des combinaisons des ces différentes modifications sont possibles aussi. La modification physique la plus utilisée est la transformation de l'amidon natif en amidon prégélatinisé. Cette modification conduit à la suppression de l'étape de chauffage de la solution d'amidon pour obtenir l'hydratation complète du polymère de glucose. Par conséquent mis dans l'eau froide, l'amidon conduit instantanément à la formation d'une solution présentant une certaine viscosité.

Sur le plan chimique, les amidons peuvent subir :
- des réactions de substitution conduisant à des amidons :
   * réticulés : création de liaisons entre deux chaînes polymériques
   * estérifiés et éthérifiés : substitution d'un groupement OH de la chaîne polymérique par des groupements hydroxypropyl, hydroxyéthyl ou acétyle
   * substitués par des groupes chimiques tel que l'octenyl succinate de sodium

Ces amidons ont la particularité d'avoir un pouvoir de rétrogradation très faible.
- des réactions d'hydrolyse conduisant à des amidons présentant de courtes chaînes polymériques :
   * Les dextrines : amidon ayant subit une dépolymérisation puis recombiné en polymères ramifié de courte chaîne. Ces amidons ne présentent pas le phénomène de rétrogradation,
   * Les amidons hydrolysés conduisant à des polymères non ramifiés de courtes chaînes. Ces amidons présentent un fort pouvoir de rétrogradation.

Ces amidons peuvent subir par la suite des réactions de substitution comme définies précédemment.
- des réactions d'oxydation conduisent à la substitution des groupements hydroxyles par des groupements COOH ou CO. Lors de ces réactions d'oxydation, il y a dépolymérisation des amidons donnant naissance à des molécules ayant de courtes chaînes polymériques. Ces amidons ne présentent pas de phénomène de rétrogradation de par l'encombrement stérique des groupements COOH et CO empêchant ainsi la formation de liaisons hydrogènes entre les chaînes polymériques.

Sur le plan enzymatique, les amidons subissent des hydrolyses. Les molécules ainsi obtenues sont dénommées maltodextrines. En fonction de l'intensité de l'hydrolyse enzymatique, il existe différents types de maltodextrines définies par le nombre de molécules de dextrose présentes sur la chaîne polymérique. Ces molécules sont solubles à froid dans l'eau et conduisent à des solutions présentant de très faibles viscosités.

Hormis les réactions enzymatiques, toutes les autres réactions chimiques sont effectuées sur le grain d'amidon lui-même. Par conséquent, il est possible de combiner la modification physique, pré-gélatinisation, et la modification chimique.

Ainsi, un même amidon substitué peut se présenter :
- sous la forme classique : amidon substitué,
- et sous la forme prégélatinisée : amidon substitué prégélatinisé.

Dans le premier cas, il sera nécessaire de chauffer la solution pour obtenir une solution colloïdale, mais à une température inférieure à celle de l'amidon natif grâce à la modification chimique effectuée sur le grain.

Dans le deuxième cas, la simple dispersion de l'amidon substitué prégélatinisé dans l'eau froide conduira à la formation de la solution colloïdale.

Tous ces amidons présentent des propriétés filmogènes dont certains sont utilisés en alimentaire pour donner un aspect brillant au produit fini tels que les gâteaux apéritifs.

Ainsi, parmi ces différents types d'amidons modifiés cités précédemment, les amidons substitués ont été retenus dans la présente invention, entre autres les amidons estérifiés et éthérifiés, prégélatinisés ou non.

Comparés aux amidons natifs, ces amidons substitués présentent une faible viscosité en milieu aqueux pour une forte concentration. A titre d'exemple, un hydroxypropyl amidon de maïs à la concentration de 15% dans l'eau conduit à une viscosité de l'ordre de 150 Centipoises.

De telles solutions sont facilement pulvérisables sur des supports solides tels que les comprimés, gélules, etc...

De plus, la forme prégélatinisée permet une solubilisation de cet amidon, à froid, dans l'eau.

Comparées aux solutions filmogènes classiques d'hydroxypropylméthylcellulose de même concentration, les viscosités de ces dernières sont nettement plus hautes tel que cela est indiqué dans le tableau ci-après, rendant ainsi impossible l'augmentation en matières solides dans lesdites solutions.

| **Concentrations** | **Phannacoat 645** | **Pharmacoat 606** | **Pharmacoat 615** |
|---|---|---|---|
| **2%** | 4.50 cPs | 6.00 cPs | 15.00 cPs |
| **4%** | 12.50 cPs | 22.50 cPs | 90.00 cPs |
| **6%** | 32.00 cPs | 65.00 cPs | 350.00 cPs |
| **8%** | 75.00 cPs | 170.00 cPs | 1100.00 cPs |
| **10%** | 175.00 cPs | 350.00 cPs | 2500.00 cPs |
| **12%** | 300.00 cPs | 650.00 cPs | / |
| **14%** | 550.00 cPs | 1200.00 cPs | / |

Le procédé de pelliculage des formes solides dans le domaine pharmaceutique est basé sur la dispersion d'une solution filmogène plus au moins visqueuse sous forme d'un brouillard constitué de très fines gouttelettes. Ce brouillard est obtenu grâce à de l'air comprimé qui agit :
- d'une part, en forçant ladite solution à travers un orifice de taille définie,
- d'autre part, en éclatant le jet en arrivant plus ou moins perpendiculairement de chaque côté du jet de liquide.

Dans de telles conditions, le débit de liquide est de l'ordre de 9g/mn à travers un orifice de 1.2 mm et la pression de l'air éclatant le jet de liquide est de l'ordre de 2 à 3 bars.

Ainsi, il est facile de comprendre que si la viscosité de la solution filmogène augmente, la pression de l'air appliquée sur cette dernière devra être plus importante pour éclater un produit plus compact. D'autre part, pour maintenir le même débit, il sera nécessaire d'augmenter l'orifice de la buse de pulvérisation. Or, ceci ne peut se faire qu'au détriment de la finesse du brouillard final. De ce fait, pour des concentrations supérieures à 12% en matière solides dans les solutions classiques de pelliculage à base d'hydroxypropylméthylcellulose, il devient impossible de pulvériser car les viscosités deviennent trop importantes pour obtenir un brouillard suffisamment fin. La limite de viscosité à ne pas dépasser, classiquement fixée avec les solutions d'hydroxypropylméthylcellulose, est de 1200 Centipoises pour une pression d'air de pulvérisation de l'ordre de 3 bars.

Par contre, dans le cas de l'hydroxypropyl amidon, les solutions présentent des viscosités relativement faibles pour des concentrations élevées.

| **CONCENTRATIONS** | **VISCOSITES** |
|---|---|
| **5%** | 15.03 cPs |
| **10%** | 36.12 cPs |
| **15%** | 148.72 cPs |
| **20%** | 556.66 cPs |
| **25%** | 2829.16 cPs |
| **30%** | 7988.88 cPs |

Par conséquent en association avec d'autres ingrédients n'ayant aucune influence sur la viscosité de ces dernières, il sera possible d'augmenter la concentration en matières solides du milieu.

Ceci est mis en évidence au niveau des compositions suivantes :
- une solution à 20% d'hydroxypropyl amidon (Dispersion 1)
- une solution à 18% d'hydroxypropyl amidon prégélatinisé, 6.0% d'hydroxypropyl amidon, 1.5% dibéhénate de glycérol, et 4.5% de dioxyde de titane (Dispersion 2).

Dans les deux cas, les solutions ont été réalisées à froid en utilisant un agitateur du type pales tournant à 700 trs/mn. Le temps d'agitation a été fixé à 120 minutes pour assurer une parfaite hydratation du polymère. La viscosité de ces deux solutions a été déterminée à l'aide d'un viscosimètre Brookfield, modèle RVT, en utilisant un mobile n°3, tournant à la vitesse de 20 trs/mn Les mesures ont été réalisées à la température de 20°C.

Conformément à notre attente, les solutions hautement concentrées à base d'hydroxypropyl amidon présentent des viscosités conformes aux caractéristiques fixées pour des solutions de pelliculage.

| | **Hydroxypropyl amidon** |
|---|---|
| **Dispersion 1** | 556.66 cPs |
| **Dispersion 2** | 650.00 cPs |

Si les amidons modifiés, entre autres les hydroxypropyl amidon font l'objet d'un certain nombre de brevets dans des domaines très divers autres que la pharmacie, la cosmétique et la diététique, ces derniers sont par contre peu utilisés dans la réalisation de solutions de pelliculage pour le domaine pharmaceutique et encore moins dans la composition de préparations filmogènes prêtes à l'emploi.

A titre d'exemple, l'hydroxypropyl amidon entre dans la composition des colles pour l'affichage sur support, tel que cela est décrit dans le brevet Américain US 4837314. Dans le domaine des compositions prêtes à l'emploi, nous pouvons citer entre autres le brevet européen EP0819387 pour l'enrobage des gommes à mâcher. Ce brevet met en oeuvre l'hydroxypropyl amidon de tapioca ayant subi au préalable une hydrolyse pour réduire la longueur des chaînes. Le degré de substitution des groupements OH par des groupements hydroxypropyl se situe entre 0.05 et 0.20. La concentration en matières solides dans la solution de pelliculage est comprise entre 5 et 60%. La réalisation de cette solution nécessite de la porter entre 60° et 70°C avant sa pulvérisation et de maintenir la température entre 30° et 50°C pendant la pulvérisation. Ces solutions sont utilisées sans additifs car les films obtenus présentent une bonne élasticité, une bonne brillance et un très bon effet isolant des noyaux.

Le deuxième brevet faisant mention de l'hydroxypropyl amidon comme agent filmogène, est le brevet de Roquette, FR2862654. L'hydroxypropyl amidon mis en oeuvre dans la présente invention est un hydroxypropyl amidon riche en amylose issu de légumineuses tels que le petit pois, les haricots, la fève et la féverole. Roquette protège une composition amylacée filmogène contenant un amidon modifié de légumineuse, un plastifiant et de l'eau, l'agent filmogène étant un amidon modifié. La teneur en amylose dans cette composition est comprise entre 25 et 45% exprimée en poids sec par rapport au poids sec d'amidon. Roquette protège cette composition filmogène pour diverses applications tel que le pelliculage de comprimés, la fabrication de films aromatiques, la fabrication de capsules molles ou dures, etc...

De ce fait, Roquette revendique une teneur en amidon de pois dans la composition filmogène comprise entre 10 et 90% car l'Homme de l'Art sait que pour les différentes applications citées ci-dessus, la concentration en agent filmogène, va varier. Dans le cas de l'application, composition filmogène pour pelliculage, Roquette protège une solution ayant une concentration en amidon modifié de 10 à 15% et préférentiellement, une composition filmogène liquide contenant 10% de matières solides conduisant à une viscosité inférieure à 500 Centipoises à 25°C. Les 10% de matières sèches englobent l'amidon de pois et le plastifiant. La teneur en plastifiant variant de 2.5 à 30% exprimée en masse par rapport à la masse totale d'amidon mise en oeuvre, il apparaît aisément que la teneur réelle en amidon varie de 5.50% à 9.75%.

D'autre part, le procédé décrit pour la réalisation de la solution de pelliculage préconise un chauffage à 90°C et la solution filmogène est maintenue à 55°C pendant toute l'opération de pulvérisation.

Ainsi, dans le brevet Européen EP0819387 et celui de Roquette, il apparaît nécessaire de chauffer la solution de pelliculage avant emploi et ce, malgré l'utilisation d'hydroxypropyl amidon.

Par contre, dans la présente invention, la solution de pelliculage est réalisée à froid. Ceci est basé sur le choix judicieux des amidons modifiés entrant dans la composition. Ainsi, contrairement au brevet de Roquette, les hydroxypropyl amidons ont été choisis parmi les plantes céréalières, tels que le maïs, le riz, le blé ainsi que parmi certaines tubéreuses tel que la pomme de terre et le tapioca, la préférence allant à l'hydroxypropyl amidon de maïs ayant été transformé génétiquement ou non, la qualité « riche en amylose » n'ayant pas été retenue. Tous ces amidons présentent des teneurs en amylose inférieures ou égales à 25% donc ne répondent pas aux critères retenus dans le brevet de Roquette, supérieures à 25%, et permettent d'avoir des solutions peu visqueuses tout en conservant leur propriétés filmogènes en raison de la faible teneur en amylose et par un choix judicieux d'additifs.

De quelqu'origine végétale que ce soit, l'hydroxypropyl amidon retenu dans la présente invention, possède un degré de substitution (DS) compris entre 0.05 à 0.20, ce degré de substitution correspondant au nombre moyen de groupements hydroxypropyl substitués pour 10 unités d'anhydroglucose. De plus, cet hydroxypropyl amidon peut avoir subi avant greffage une modification physique, prégélatinisation, et/ou une modification chimique telle qu'une hydrolyse partielle.

La concentration en hydroxypropyl amidon dans la présente composition solide prête à l'emploi est supérieure à 50%. La préférence est donnée à une composition prête à l'emploi contenant de 70 à 95% en masse par rapport à la masse totale de la composition filmogène, d'hydroxypropyl amidon. Tenant compte que, dans la présente invention la teneur en matières solides des solutions ou dispersions de pelliculage reconstituées à partir desdites compositions, peuvent contenir de 25 à 35% de matières sèches exprimé en masse par rapport à la masse totale de la solution, la concentration en hydroxypropyl amidon est de ce fait, comprise entre 17.5% à 33.25%, teneur nettement supérieure à celle protégée par Roquette, soit 5.50 à 9.75% exprimé en masse par rapport à la masse totale de la solution, pour l'application compositions filmogènes pour pelliculage.

Dans un cadre général, les compositions filmogènes prêtes à l'emploi contiennent en plus de l'agent filmogène de base, des substances :
- de charge facilitant le pelliculage,
- augmentant l'élasticité du film,
- améliorant l'aspect final du pelliculage,
- apportant des propriétés spécifiques au film.

Il a été démontré que l'addition de certains ingrédients à la solution de pelliculage facilitait le pelliculage, telle qu'une prise de masse plus rapide ou une réduction du temps de séchage. Ces substances sont qualifiées dans le cas présent de « charges ».

On entend par « charges » toutes substances susceptibles de s'incorporer dans les mailles du réseau filmogène sans en modifier sa structure et ses propriétés physiques. Ce sont des substances qualifiées d'inertes. Elles ne sont là que pour augmenter la teneur en matières sèches de la solution filmogène sans en modifier les propriétés finales de cette dernière. Généralement, ces substances sont insolubles ou faiblement solubles dans le milieu de solubilisation de l'agent filmogène. Parmi les substances pouvant agir de la sorte, ont été retenues dans la présente invention, la cellulose microcristalline, le lactose, les amidons natifs et les amidons modifiés non prégélatinisés. Préférentiellement, ont été retenus les amidons natifs et les amidons modifiés non prégélatinisés telles que les maltodextrines. La concentration en ces amidons peut varier de 0.1 à 50% exprimée en masse par rapport à la masse totale de la composition filmogène prête à l'emploi. Concernant l'élasticité des films, ce critère est très important dans le cas du pelliculage. En effet, toute substance filmogène peut être utilisée dans le cas d'un pelliculage de formes solides. Cependant telles quelles, la majorité d'entre elles présentent un fort pouvoir de rétractation au séchage. Cette rétractation provient d'une évaporation de l'eau contenue entre les chaînes polymériques de l'agent filmogène. Par conséquent, sur les angles vifs des comprimés, le pelliculage se détache de son support par craquèlement. Dans le cas des capsules molles considérées comme formes solides, l'élasticité du film est primordiale de par la déformation potentielle de la capsule sous l'effet d'une pression. Ainsi, le film déposé à la surface de cette dernière doit avoir la capacité à subir une déformation sans se rompre.

Pour pallier à cet inconvénient, des substances qualifiées de plastifiants sont additionnés à la solution de pelliculage. Elles s'intercalent entre les chaînes du polymère filmogène par formation de liaisons hydrogènes comme le font les molécules d'eau. Cependant lors du séchage, ces molécules ne sont pas évaporées et donnent naissance à un réseau plus souple. Parmi les substances pouvant agir de la sorte dans la présente invention se trouvent des plastifiants de types hydrophiles tels que le glycérol, le sorbitol, les anhydrides de sorbitol, les polyoxyéthylène glycol, le triéthylcitrate, le propylène glycol, etc....

Cependant, associés aux amidons qu'ils soient modifiés ou non, la majorité de ces plastifiants conduisent à des films d'enrobage plus ou moins collants en raison de la forte hygroscopicité de ces agents filmogènes. Ainsi, pour pallier à cet inconvénient ont été aussi retenues des molécules à chaînes grasses possédant des groupements électro-attracteurs permettant ainsi la formation de liaisons hydrogènes avec les chaînes polymériques de l'agent filmogène.

On entend par « groupements électro-attracteurs », tous groupements chimiques chargés positivement ou négativement facilitant la création de liaisons chimiques de faible énergie tel que des liaisons hydrogènes. Parmi ces groupements sont retenus ceux contenant des atomes d'hydrogène ou d'oxygène. Ces substances sont d'autant plus intéressantes qu'en dehors de la formation de liaisons hydrogènes avec les chaînes polymériques, elles réagissent en particulier avec l'amylose pour former des complexes conduisant, en fonction de la concentration, jusqu'à la gélification de l'amidon telle qu'observée avec la gélatine. Cette réaction est très connue de l'Homme de l'Art de l'industrie de panification. Par conséquent pour de faibles concentrations en agents plastifiants lipophiles, le pouvoir filmogène de l'hydroxypropyl amidon est renforcé. Ont été retenus comme plastifiants lipophiles répondant aux critères précédents, les familles chimiques suivantes :
- des dérivés du glycérol :
   * esters d'acide gras du glycérol
   * esters d'acide gras du polyglycérol
   * esters d'acide gras du glycérol polyoxyéthyléné
   * esters d'acide gras du glycérol substitué
- des dérivés du glycol
   * esters d'acide gras du glycol
   * esters d'acide gras du propylène glycol
   * esters d'acide gras du polyoxyéthylène glycol
   * esters d'alcools gras du polyoxyéthylène glycol
   * esters d'acide gras de l'éthylène glycol
   * esters d'acide gras du diéthylène glycol
- dérivés des polyols
   * les sorbitanes (laurate, oleate, palmitate, stéarate, trioléate)
   * les sucro-esters d'acides gras
- dérivés des huiles végétales telles que l'huile de ricin, l'huile de soja, etc....
   * simple et/ou hydroxylées
   * simples hydroxylées et/ou hydrogénées
   * simples et/ou hydroxylées et/ou hydrogénées et/ou polyoxyéthylénées
- les diesters de diacides et d'alcools tel que le sébacate de butyl, etc...

Parmi les acides gras pouvant jouer le rôle de chaînes grasses dans les plastifiants lipophiles retenus, notre préférence s'est tournée vers les acides stéarique, cétostéarique, caprylocaprique, oléique, laurique, linolénique, linoléique, myristique, palmitique, dibéhénique, undécylénique, ricinoléique.

Les chaînes grasses peuvent être aussi des alcools gras des acides gras correspondant et mentionnés ci-dessus. Au sein d'une même famille, ces plastifiants peuvent être utilisés seuls ou en combinaison tel que le mélange monostéarate de glycérol/monopalmitate de glycérol. En fonction de leur réactivité avec l'hydroxypropyl amidon mis en oeuvre, la teneur en plastifiants lipophiles varie de 0.1% à 50% exprimée en masse par rapport à la masse d'amidon mis en oeuvre, cette réactivité étant dépendante de la concentration en amylose contenu dans l'hydroxypropyl amidon.

De plus pour réduire l'aspect collant du pelliculage dû aux plastifiants classiques hydrophiles, ces derniers peuvent être combinés de manière judicieuse avec les plastifiants à caractères lipophiles.

Les proportions retenues dans ce cas de figure, s'échelonnent de 1:99 à 99:1 par rapport à la masse totale d'agents plastifiants mis en oeuvre.

Que ce soit parmi les plastifiants hydrophiles ou lipophiles, certains d'entre eux se présentent à l'état liquide tel que la glycérine. Par conséquent leur introduction dans les compositions de pelliculage prêtes à l'emploi n'est pas possible telle quelle. La difficulté a été contournée par fixation de ces derniers sur des supports solides ayant la particularité de les relarguer en milieu liquide. Ces supports sont d'origine minérale à très fort pouvoir absorbant tel que les silices colloïdales, la lévilite, l'aluminosilicate de magnésium, le phosphate de calcium dibasique anhydre,etc..

Le pourcentage de fixation de l'agent plastifiant sur ce support est fonction de la porosité du support mis en oeuvre. Ainsi, il peut varier de 1% à 60% exprimé en masse par rapport à la masse totale du support.

Dans la composition filmogène prête à l'emploi, le pourcentage du mélange plastifiant/support à incorporer va varier en fonction de l'élasticité recherchée pour le film. Celui- ci peut varier de 5 à 40% exprimé en masse par rapport à la masse totale de la composition filmogène. Hormis la réalisation de films incolores pour donner une brillance finale au comprimé ou autres supports solides, les compositions prêtes à l'emploi peuvent contenir des opacifiants tel que l'oxyde de titane et du talc, mais aussi des colorants utilisés à l'état pur ou fixés sur des supports comme des laques d'alumine. Les oxydes de fer sont aussi retenus comme colorants de même que des colorants purement naturels tels que le rouge de betterave, la chlorophylle, la riboflavine, le caramel, etc...

Que ce soit l'oxyde de titane, le talc et les colorants, leur concentration dans le milieu est fonction de l'effet recherché. Celle-ci varie, en fonction de la nature du colorant, de 0.1% à 30% exprimée en masse par rapport au poids total de la composition prête à l'emploi.

D'une façon générale, le pelliculage des formes solides tels que les comprimés, a pour but d'isoler le noyau de l'environnement extérieur. Les films contenant de l'oxyde de titane, outre le fait que ce dernier présente un pouvoir couvrant non négligeable et conduit à une répartition homogène du colorant, il protège les principes actifs sensibles à l'action de la lumière.

Dans la présente invention, l'utilisation de certaines substances permet d'apporter d'autres caractéristiques physico-chimiques aux films tel que :
- un masquage d'odeur par l'utilisation de substances aromatisantes présentant une composante parfumée prononcée, tels que des menthes, des agrumes, certains fruits rouges,
- un effet barrière contre l'humidité par la mise en oeuvre de substances hydrophobes tel que :
   * des acides gras : acide stéarique, palmitique, oléique, etc...
   * des alcools gras : alcool cétylique, stéarylique, etc...
   * des silicones
- une amélioration de l'effet glissant lors d'un pelliculage de comprimés présentant un rayon de courbure très faible. Cette propriété est obtenue par incorporation dans le film d'un agent de glissement appartenant à la famille des mica-titanes, mélange d'aluminium silicate de potassium et de titane.

Quel que soit l'effet recherche, masquage de goût, barrière protectrice contre l'humidité, et l'amélioration du pouvoir glissant, la concentration de ces différentes substances varie de 0.1% à 20% exprimée en masse par rapport au poids total de la composition filmogène prête à l'emploi.

Généralement, la composition filmogène prête à l'emploi est destinée à être dispersée en milieu aqueux. Contrairement aux brevets cités précédemment, la mise en solution ou dispersion de ces dites compositions se fait à froid et sur un laps de temps relativement court, 20 à 30 minutes. La teneur en eau mise en oeuvre lors cette dispersion varie de 80% à 60% exprimée en masse par rapport à la masse totale de la dispersion filmogène, de préférence comprise entre 75% et 55%. La viscosité de telles dispersions, déterminée à 20°C à l'aide d'un viscosimètre Brookfield, mobile n°3, vitesse 20, est comprise entre 150 et 900 Centipoises.

Contrairement aux dispersions classiques d'hydroxypropylméthylcellulose à la concentration de 12 à 15%, ces dispersions objet de la présente invention, présentent aux concentrations revendiquées, la particularité d'être thixotropes conduisant à une très grande stabilité physique des dispersions au repus : absence de sédimentation des composants insolubles contenus dans la préparation.

On entend par « thixotrope », la propriété qu'ont certaines préparations visqueuses de se liquéfier rapidement (chute de viscosité) sous l'effet d'une agitation mécanique plus ou moins intense et de reprendre un aspect pseudo solide (augmentation de la viscosité) lors de la cessation de l'agitation.

De plus, en raison de la haute concentration en matières solides dans la dispersion reconstituée entraînant une diminution de la température d'évaporation de l'eau de 40°C à 30-32°C, ces compositions filmogènes sont parfaitement adaptées au pelliculage des capsules molles en milieu aqueux. En effet, actuellement le pelliculage des capsules molles ne peut se faire qu'en milieu alcoolique en raison de la réactivité de la gélatine :
- à de trop grandes quantités d'eau mises en oeuvre lors du pelliculage avec des solutions d'hydroxypropylméthylcellulose, entraînant la solubilisation de cette dernière
- et à une température supérieure à 40°C mise en oeuvre pour évaporer les fortes teneurs en eau, provoquant ainsi la prise en masse des capsules par fonte de la gélatine.

Les exemples de compositions prêtes à l'emploi figurant ci-après sont des formules possibles de compositions selon la présente invention et ils ne les limitent en aucune façon.

**EXEMPLE N°1 : composition filmogène**

| | |
|---|---|
| Hydroxypropyl amidon prégélatinisé | 600 g |
| Hydroxypropyl amidon | 150 g |
| Dibéhénate de glycérol | 100 g |
| Dioxyde de titane | 100 g |
| Arôme orange/pamplemousse | 50 g |
| Jaune de quinoléine | QS |

Pour le pelliculage de 6 kg de comprimés avec un dépôt sec de 5%, une dispersion à 30% de la composition prête à l'emploi décrite ci-dessus a été réalisée :
Dans un bêcher de 1 litre introduire 770 ml* d'eau déminéralisée.

Agiter le milieu à 700 trs/mn à l'aide d'une pale. Introduire progressivement 330 g* du mélange décrit dans « EXEMPLE N°1 »

Maintenir l'agitation pendant 30 minutes.
* 10% ont été ajoutés pour compenser les pertes en fabrication

La viscosité de la solution à 20°C déterminée avec le mobile 3 à la vitesse de 20trs/mn est de 355 Centipoises. Avant pulvérisation, les comprimés ont été préalablement chauffés à 30°C.

Au cours de la pulvérisation les paramètres de travail ont été établis
- débit de pulvérisation comprise entre 12 et 16 g/mn
- pression de pulvérisation comprise entre 2.5 et 3 bars
- température de travail entre 27°C et 32°C
- temps de pelliculage : 90 minutes.

Les comprimés obtenus après pelliculage présentent un aspect très lisse, brillant avec une très bonne adhérence du film sur le noyau. A l'aide d'un scalpel, il n'a pas été possible de désolidariser le film du support solide.

**EXEMPLE N°2 : Dispersion filmogène à 25% pour 6 kg de comprimés**

| | |
|---|---|
| Hydroxypropyl amidon prégélatinisé | 198.0 g |
| Hydroxypropyl amidon | 49.5 g |
| Dibéhénate de glycérol | 16.5 g |
| Dioxyde de titane | 49.5 g |
| Arôme menthe | 16.5 g |
| Eau purifiée | 990.0 g |
| Jaune de quinoléine | QS |
| Bleu patenté | QS |

Peser les différents ingrédients de la formule.

Mélanger les différents composants entre eux sauf le dioxyde de titane.

Dans un bêcher de 2 litres introduire 990 ml d'eau déminéralisée.

Agiter le milieu à 700 trs/mn à l'aide d'une pale. Introduire progressivement le dioxyde de titane.

Agiter pendant 3 à 5 minutes.

Introduire ensuite progressivement le mélange des différents composants.

Ajouter les colorants en dernier.

Maintenir l'agitation pendant 30 minutes.

La viscosité de la solution à 20°C déterminée avec le mobile 3 à la vitesse de 20trs/mn est de 300 Centipoises. Avant pulvérisation, les comprimés ont été préalablement chauffés à 30°C.

Au cours de la pulvérisation les paramètres de travail ont été établis
- débit de pulvérisation comprise entre 14 et 18 g/mn
- pression de pulvérisation comprise entre 2 et 2.5 bars
- température de travail entre 27°C et 32°C
- temps de pelliculage : 90 minutes.

**EXEMPLE N°3 : Dispersion filmogène à 30% pour 6 kg de comprimés.**

| | |
|---|---|
| Hydroxypropyl amidon prégélatinisé | 198.0 g |
| Hydroxypropyl amidon | 66.0 g |
| Dibéhénate de glycérol | 16.5 g |
| Dioxyde de titane | 49.5 g |
| Eau purifiée | 770.0 g |
| Oxyde de fer rouge | QS |

Peser les différents ingrédients de la formule.

Mélanger les différents composants entre eux sauf le dioxyde de titane.

Dans un bêcher 1 litre introduire 770 ml d'eau déminéralisée.

Agiter le milieu à 700 trs/mn à l'aide d'une pâle. Introduire progressivement le dioxyde de titane et l'oxyde de fer rouge.

Agiter pendant 3 à 5 minutes jusqu'à dispersion totale de l'oxyde de fer rouge.

Introduire ensuite progressivement le mélange des différents composants.

Maintenir l'agitation pendant 30 minutes

La viscosité de la solution à 20°C déterminée avec le mobile 3 à la vitesse de 20trs/mn est de 475 Centipoises. Avant pulvérisation, les comprimés ont été préalablement chauffés à 30°C.

Au cours de la pulvérisation les paramètres de travail ont été établis
- débit de pulvérisation comprise entre 14 et 16 g/mn
- pression de pulvérisation comprise entre 2.5 et 3 bars
- température de travail entre 27°C et 32°C
- temps de pelliculage : 90 minutes.

Les comprimés obtenus après pelliculage présentent un aspect très lisse, brillant avec une très bonne adhérence du film sur le noyau.

**EXEMPLE N°4 :Dispersion filmogène à 30% pour 6 kg de comprimés**

| | |
|---|---|
| Hydroxypropyl amidon prégélatinisé | 222.75 g |
| Hydroxypropyl amidon | 90.75 g |
| Dibéhénate de glycérol | 16.50 g |
| Eau purifiée | 770.00 g |
| Bleu patenté | QS |
| Jaune orangé S | QS |
| Jaune de quinoléine | QS |

Peser les différents ingrédients de la formule.

Mélanger les différents composants entre eux.

Dans un bêcher de 1 litre introduire 770 ml d'eau déminéralisée.

Agiter le milieu à 700 trs/mn à l'aide d'une pâle. Introduire progressivement le mélange des différents composants.

Ajouter en dernier les colorants.

Maintenir l'agitation pendant 30 minutes.

La viscosité de la solution à 20°C déterminée avec le mobile 3 à la vitesse de 20trs/mn est de 650 Centipoises. Avant pulvérisation, les comprimés ont été préalablement chauffés à 30°C.

Au cours de la pulvérisation les paramètres de travail ont été établis
- débit de pulvérisation comprise entre 14 et 16 g/mn
- pression de pulvérisation comprise entre 2.5 et 3 bars
- température de travail entre 27°C et 32°C
- temps de pelliculage : 90 minutes.

Les comprimés obtenus après pelliculage présentent un aspect très lisse, brillant avec une très bonne adhérence du film sur le noyau. Malgré l'absence de dioxyde de titane dans la composition, la coloration des comprimés est homogène.

**EXEMPLE N°5 : Dispersion filmogène à 30% pour 6 kg de comprimés**

| | |
|---|---|
| Hydroxypropyl amidon prégélatinisé | 181.50 g |
| Hydroxypropyl amidon | 92.40 g |
| Dibéhénate de glycérol | 16.50 g |
| Acide stéarique | 39.60 g |
| Eau purifiée | 770.00 g |
| Carmin d'indigotine | QS |
| Erythrosine | QS |

Peser les différents ingrédients de la formule.

Mélanger les différents composants entre eux.

Dans un bêcher de 1 litre introduire 770 ml d'eau déminéralisée.

Agiter le milieu à 700 trs/mn à l'aide d'une pâle. Introduire progressivement le mélange des différents composants.

Ajouter en dernier les colorants.

Maintenir l'agitation pendant 30 minutes

La viscosité de la solution à 20°C déterminée avec le mobile 3 à la vitesse de 20trs/mn est de 875 Centipoises. Avant pulvérisation, les comprimés ont été préalablement chauffés à 30°C.

Au cours de la pulvérisation les paramètres de travail ont été établis
- débit de pulvérisation comprise entre 12 et 14 g/mn
- pression de pulvérisation comprise entre 3 et 4 bars
- température de travail entre 27°C et 32°C
- temps de pelliculage : 80 minutes.

Les comprimés obtenus après pelliculage présentent un aspect très lisse, brillant avec une très bonne adhérence du film sur le noyau. Malgré l'absence de dioxyde de titane dans la composition, la coloration des comprimés est homogène.

**EXEMPLE N°6 : Dispersion filmogène à 30% pour 6 kg de comprimés**

| | |
|---|---|
| Hydroxypropyl amidon prégélatinisé | 181.5 g |
| Hydroxypropyl amidon | 49.5 g |
| Dibéhénate de glycérol | 16.5 g |
| Dioxyde de titane | 49.5 g |
| Acide stéarique | 33.0 g |
| Eau purifiée | 770.0 g |
| Oxyde de fer rouge | QS |

Peser les différents ingrédients de la formule.

Mélanger les différents composants entre eux sauf le dioxyde de titane

Dans un bêcher de 1 litre introduire 770 ml d'eau déminéralisée.

Agiter le milieu à 700 trs/mn à l'aide d'une pâle. Introduire progressivement le dioxyde de titane et l'oxyde de fer rouge.

Agiter pendant 3 à 5 minutes jusqu'à dispersion totale de l'oxyde de fer rouge.

Introduire ensuite progressivement le mélange des différents composants.

Maintenir l'agitation pendant 30 minutes

La viscosité de la solution à 20°C déterminée avec le mobile 3 à la vitesse de 20trs/mn est de 700 Centipoises. Avant pulvérisation, les comprimés ont été préalablement chauffés à 30°C.

Au cours de la pulvérisation les paramètres de travail ont été établis
- débit de pulvérisation comprise entre 14 et 18 g/mn
- pression de pulvérisation comprise entre 2.5 et 3 bars
- température de travail entre 27°C et 32°C
- temps de pelliculage : 60 minutes.

Les comprimés obtenus après pelliculage présentent un aspect très lisse, brillant avec une très bonne adhérence du film sur le noyau.

**EXEMPLE N°7 : Dispersion filmogène à 30% pour 2 kg de**

| | |
|---|---|
| capsules molles | |
| Hydroxypropyl amidon prégélatinisé | 53,0 g |
| Acide stéarique | 17,0 g |
| Glycérine | 20,0g |
| Candurin® | 10,0 g |
| Eau purifiée | 233,3 g |

Peser les différents ingrédients de la formule.

Mélanger les différents composants entre eux sauf la glycérine
Dans un bêcher de 500 ml introduire 233,3 ml d'eau déminéralisée.

Ajouter la glycérine.

Agiter le milieu à 700 trs/mn à l'aide d'une pâle.

Agiter pendant 3 à 5 minutes.

Introduire ensuite progressivement le mélange des différents composants.

Maintenir l'agitation pendant 30 minutes.

La viscosité de la solution à 20°C déterminée avec le mobile 3 à la vitesse de 20trs/mn est de 700 Centipoises. Avant pulvérisation, laver les capsules molles à l'alcool et les pré-chauffer à 30°C.

Au cours de la pulvérisation, les paramètres de travail ont été établis
- débit de pulvérisation compris entre 14 et 18 g/mn
- pression de pulvérisation comprise entre 2.5 et 3 bars
- température de travail entre 27°C et 32°C
- temps de pelliculage : 60 minutes.

Les capsules molles obtenues après pelliculage présentent un aspect très lisse, brillant avec une très bonne adhérence du film sur la capsule.

## Revendications

1. Compositions filmogènes solides, prêtes à l'emploi, destinées à la réalisation à froid de solutions ou dispersions de pelliculage, de concentration en matières solides comprise entre 25% et 35%, en matières solides, dans le but de réduire le temps de pelliculage, **CARACTERISEE EN CE Qu'**elles sont constituées :
- d'un agent filmogène à une concentration supérieure à 50% en masse par rapport à la masse totale du mélange prêt à l'emploi et appartenant à la famille des amidons modifiées issus de céréales ou de tubéreuses dont la teneur en amylose est inférieure à 25% en masse par rapport à la masse totale de l'amidon, cet amidon modifié étant de l'hydroxypropyl amidon.
- d'un plastifiant, à une concentration comprise entre 0,1% et 50% par rapport à la masse d'amidon mis en oeuvre
- de charges facilitant le pelliculage, appartenant à la famille des amidons natifs et des amidons modifiés non prégélatinisés, à une concentration comprise entre 0,1% et 50% par rapport à la masse totale du mélange prêt à l'emploi
- de substances apportant d'autres caractéristiques physico-chimiques aux films,
- et de colorants,
l'ensemble conduisant à des solutions ou dispersions présentant une viscosité à 20°C, inférieure à 1000 Pa.s (Centipoises) pour une concentration en matières solides comprise entre 25% et 35% correspondant à une teneur en amidon modifié de l'ordre de 17.5% à 33.25% par rapport à la masse totale de la solution de pelliculage, ces solutions ou dispersions étant destinées à être pulvérisées sur des formes solides ou semi-solides.

2. Compositions filmogènes solides selon la revendication 1, **CARACTERISEES EN CE QUE** les amidons modifiés sont des amidons de maïs, de blé, de pomme de terre, de tapioca, de riz.

3. Compositions filmogènes solides selon la revendication 1, **CARACTERISEES EN CE QUE** les amidons
modifiés peuvent être préalablement hydrolysés et/ou prégélatinisés.

4. Compositions filmogènes solides selon la revendication 1, **CARACTERISEES EN CE QUE** l'hydroxypropyl amidon est un hydroxypropyl amidon de maïs génétiquement modifié ou non.

5. Compositions filmogènes solides selon la revendication 1, **CARACTERISEES EN CE QUE** le degré de substitution des hydroxypropyl amidons est compris entre 0.05 et 0.2.

6. Compositions filmogènes solides selon la revendication 1, **CARACTERISEES EN CE QUE** la teneur totale en hydroxypropyl amidon est comprise entre 70 et 95% exprimée en masse par rapport à la masse totale desdites compositions.

7. Compositions filmogènes solides selon la revendication 1, **CARACTERISEES EN CE QUE** les charges sont des celluloses micro cristallines, du lactose des amidons natifs, des amidons modifiés non prégélatinisés telles que les maltodextrines.

8. Compositions filmogènes solides selon la revendication 1, **CARACTERISEES EN CE QUE** les plastifiants sont des molécules hydrophiles et/ou des molécules à chaînes grasses.

9. Compositions filmogènes solides selon les revendications 1 et 8, **CARACTERISEES EN CE QUE** les plastifiants liquides, hydrophiles ou à chaînes grasses, peuvent être fixés sur des supports solides.

10. Compositions filmogènes solides selon les revendications 1, 8 et 9, **CARACTERISEES EN CE QUE** les supports solides sont des minéraux tels que la silice colloïdale, la lévilite, l'aluminosilicate de magnésium, le phosphate de calcium dibasique.

11. Compositions filmogènes solides selon les revendications 1 et 8, 9 et 10, **CARACTERISEES EN CE QUE** le pourcentage de fixation des plastifiants sur le support solide est compris entre 1% et 60% exprimé en masse par rapport à la masse totale du support.

12. Compositions filmogènes solides selon les revendications 1, 8, 9, 10, 11 et 12, **CARACTERISEES EN CE QUE** le pourcentage en plastifiants fixés sur support solide est compris entre 5% et 40% exprimé en masse par rapport à la masse totale desdites compositions filmogènes.

13. Compositions filmogènes solides selon les revendications 1 et 8, **CARACTERISEES EN CE QUE** les plastifiants hydrophiles sont le glycérol, le sorbitol, les anhydrides de sorbitol, les polyoxyéthylène glycol, le triéthylcitrate et le propylène glycol.

14. Compositions filmogènes solides selon les revendications 1 et 8, **CARACTERISEES EN CE QUE** les plastifiants lipophiles appartiennent aux dérivés du glycol, du glycérol, des polyols, des huiles végétales, et des diesters de diacides et d'alcools.

15. Compositions filmogènes solides selon les revendications 1, 8 et 14, **CARACTERISEES EN CE QUE** les chaînes grasses des plastifiants lipophiles appartiennent à la classe des acides et des alcools gras, tels que l'acide stéarique, cétostéarique, caprylocaprique, oléique, laurique, linolénique, linoléique, myristique, palmitique, béhénique, undécylénique, ricinoléique.

16. Compositions filmogènes solides selon la revendication 1, **CARACTERISEES EN CE QUE** les colorants sont naturels ou synthétiques fixés sur support alumine ou non.

17. Compositions filmogènes solides selon les revendications 1 et 16, **CARACTERISEES EN CE QUE** la teneur en colorant est comprise entre 0.1% et 30% exprimée en masse par rapport à la masse totale des dites compositions.

18. Compositions filmogènes solides selon la revendication 1, **CARACTERISEES EN CE Qu'**elles contiennent des masqueurs d'odeur tels que des arômes à composante parfumée marquée

19. Compositions filmogènes solides selon la revendication 1, **CARACTERISEES EN CE Qu'**elles contiennent des protecteurs contre l'humidité tels que les acides et les alcools gras et les huiles de silicones

20. Compositions filmogènes solides selon la revendication 1, **CARACTERISEES EN CE Qu'**elles contiennent des agents de glissement tels que les mica-titanes.

21. Compositions filmogènes solides selon les revendications 27 à 29, **CARACTERISEES EN CE QUE** les concentrations en masqueurs d'odeur, protecteurs contre l'humidité et agents de glissement sont comprises entre 0.05 et 20% exprimée en masse par rapport à la masse totale des dites compositions.

22. Compositions filmogènes solides selon l'ensemble des revendications 1 à 21, **CARACTERISEES EN CE QUE** la viscosité des dites solutions ou dispersions est comprise entre 150 et 900 Centipoises.

## Patentansprüche

1. Feste filmbildende Zusammensetzungen, die zur Verwendung bereitstehen, ausgelegt für die kalte Herstellung von Lösungen oder Dispersionen zur Laminierung, mit einer Konzentration von festen Materialien, die zwischen 25 % und 35 % von festen Materialien liegt, mit dem Ziel die Laminierungszeit zu reduzieren, **dadurch gekennzeichnet, dass** sie aus Folgendem bestehen:
- einem filmbildenden Mittel mit einer Konzentration von mehr als 50 Massenprozent mit Bezug auf die Gesamtmasse der Mischung, die zur Verwendung bereitsteht, und zur Familie der modifizierten Stärken gehört, die aus Getreide oder aus Tuberosen stammen, deren Amylosegehalt geringer als 25 Massenprozent mit Bezug auf die Gesamtmasse der Stärke ist, wobei diese modifizierte Stärke Hydroxypropylstärke ist.
- einem Weichmacher mit einer Konzentration zwischen 0,1 % und 50 % mit Bezug auf die verwendete Stärkemasse
- Ladungen, die die Laminierung erleichtern, die zur Familie der nativen Stärken und der nicht vorgelatinisierten modifizierten Stärken gehören, mit einer Konzentration zwischen 0,1 % und 50 % mit Bezug auf die Gesamtmasse der Mischung, die zur Verwendung bereitsteht
- Substanzen, die den Filmen weitere physischchemische Eigenschaften bereitstellen,
- und Farbstoffen,
wobei die Gesamtheit zu Lösungen oder Dispersionen führt, die eine Viskosität bei 20 °C von weniger als 1000 Pa.s (Centipoise) bei einer Konzentration von festen Materialien zwischen 25 % und 35 % aufweist, die einem Gehalt an modifizierter Stärke im Bereich von 17,5 % bis 33,25 % mit Bezug auf die Gesamtmasse der Laminierungslösung entspricht, wobei diese Lösungen oder Dispersionen ausgelegt sind, um auf festen oder halbfesten Formen pulverisiert zu werden.

2. Feste filmbildende Zusammensetzungen nach Anspruch 1, **dadurch gekennzeichnet, dass** die modifizierten Stärken Stärken aus Mais, Getreide, Kartoffel, Tapioka und Reis sind.

3. Feste filmbildende Zusammensetzungen nach Anspruch 1, **dadurch gekennzeichnet, dass** die modifizierten Stärken im Voraus hydrolisiert und/oder vorgelatinisiert werden können.

4. Feste filmbildende Zusammensetzungen nach Anspruch 1, **dadurch gekennzeichnet, dass** Hydroxypropylstärke eine Hydroxypropylstärke aus genetisch modifiziertem oder nicht modifiziertem Mais ist.

5. Feste filmbildende Zusammensetzungen nach Anspruch 1, **dadurch gekennzeichnet, dass** die Substitutionsrate der Hydroxypropylstärken zwischen 0,05 und 0,2 liegt.

6. Feste filmbildende Zusammensetzungen nach Anspruch 1, **dadurch gekennzeichnet, dass** der Gesamtgehalt an Hydroxypropylstärke zwischen 70 und 95 % liegt, exprimiert in Masse mit Bezug auf die Gesamtmasse der Zusammensetzungen.

7. Feste filmbildende Zusammensetzungen nach Anspruch 1, **dadurch gekennzeichnet, dass** die Ladungen mikrokristalline Zellulosen, Laktose der nativen Stärken, nicht vorgelatinisierte modifizierte Stärken wie z. B. Maltodextrine sind.

8. Feste filmbildende Zusammensetzungen nach Anspruch 1, **dadurch gekennzeichnet, dass** die Weichmacher hydrophile Moleküle und/oder Moleküle mit Fettketten sind.

9. Feste filmbildende Zusammensetzungen nach Anspruch 1 und 8, **dadurch gekennzeichnet, dass** die flüssigen, hydrophilen oder mit Fettketten versehenen Weichmacher auf festen Trägern fixiert sein können.

10. Feste filmbildende Zusammensetzungen nach Anspruch 1, 8 und 9, **dadurch gekennzeichnet, dass** die festen Träger Mineralien sind wie z. B. Kieselsol, Levilit, Magnesiumaluminosilikat, dibasisches Calciumphosphat.

11. Feste filmbildende Zusammensetzungen nach Anspruch 1 und 8, 9 und 10, **dadurch gekennzeichnet, dass** der Prozentsatz der Fixierung der Weichmacher auf dem festen Träger zwischen 1 % und 60 % liegt, exprimiert in Masse mit Bezug auf die Gesamtmasse des Trägers.

12. Feste filmbildende Zusammensetzungen nach Anspruch 1, 8, 9, 10, 11 und 12, **dadurch gekennzeichnet, dass** der Prozentsatz an Weichmachern, die auf dem Träger fixiert sind, zwischen 5 % und 40 % liegt, exprimiert in Masse mit Bezug auf die Gesamtmasse der filmbildenden Zusammensetzungen.

13. Feste filmbildende Zusammensetzungen nach Anspruch 1 und 8, **dadurch gekennzeichnet, dass** die hydrophilen Weichmacher Glycerol, Sorbitol, Sorbitolanhydride, Polyoxyethylenglycol, Triethylcitrat und Propylenglycol sind.

14. Feste filmbildende Zusammensetzungen nach Anspruch 1 und 8, **dadurch gekennzeichnet, dass** die lyophilen Weichmacher zu den Derivaten von Glykol, Glycerol, Polyolen pflanzlichen Fetten und Disäure-Diestern und Alkoholen gehören.

15. Feste filmbildende Zusammensetzungen nach Anspruch 1, 8 und 14, **dadurch gekennzeichnet, dass** die Fettketten der liophilen Weichmacher zur Klasse der Säuren und der Fettalkohole gehören, wie z. B. der Stearin-, Cetostearin-, Caprylocaprin-, Öl-, Laurin-, Linol-, Linolen-, Myristin, Palmitin-, Behen-, Undecylen-, Ricinolensäure.

16. Feste filmbildende Zusammensetzungen nach Anspruch 1, **dadurch gekennzeichnet, dass** die Farbstoffe natürlich oder synthetisch sind, fixiert auf Trägeraluminium oder nicht.

17. Feste filmbildende Zusammensetzungen nach Anspruch 1 und 16, **dadurch gekennzeichnet, dass** der Gehalt an Farbstoff zwischen 0,1 % und 30 % liegt, exprimiert in Masse mit Bezug auf die Gesamtmasse der Zusammensetzungen.

18. Feste filmbildende Zusammensetzungen nach Anspruch 1, **dadurch gekennzeichnet, dass** sie Geruchsmasken wie z. B. Aromen mit einem markierten parfümierten Bestandteil umfassen.

19. Feste filmbildende Zusammensetzungen nach Anspruch 1, **dadurch gekennzeichnet, dass** sie Schutzvorrichtungen gegen Feuchtigkeit wie z. B. Fettsäuren und Fettalkohole und Silikonöle umfassen.

20. Feste filmbildende Zusammensetzungen nach Anspruch 1, **dadurch gekennzeichnet, dass** sie Gleitmittel wie z. B. Titanglimmer umfassen.

21. Feste filmbildende Zusammensetzungen nach Anspruch 27 bis 29, **dadurch gekennzeichnet, dass** die Konzentrationen an Geruchsmasken, Schutzvorrichtungen gegen Feuchtigkeit und Gleitmitteln zwischen 0,05 und 20 % liegen, exprimiert in Masse mit Bezug auf die Gesamtmasse der Zusammensetzungen.

22. Feste filmbildende Zusammensetzungen nach Anspruch 1 bis 21, **dadurch gekennzeichnet, dass** die Viskosität der Lösungen oder Dispersionen zwischen 150 und 900 Centipoise liegt.

## Claims

1. Ready-to-use solid film-forming compositions intended for cold-producing film-coating solutions or dispersions, solid material concentration between 25 % and 35 %, in solid material, so as to reduce the film-coating time, **characterized in that** they are constituted by :
- a film-forming agent with a concentration greater than 50 % by weight with respect to the total weight of the ready-to-use mixture and belonging to the modified starch family resulting form cereals or tuberoses, the amylose content of which is below 25 % by weight with respect to the total weight of starch, this modified starch being the hydroxypropyl starch.
- a plasticizer, with a concentration between 0,1 % and 50% with respect to the weight of starch implemented
- fillers facilitating film-coating, belonging to the native starch family and to non-pregelatinized modifed starches, with a concentration between 0,1 % and 50% with respect to the total weight of the ready-to-use mixture - substances conferring other physicochemical features on films,
- and dyes,
all leading to solutions or dispersions having a viscosity of 20°C, below 1000 cPs (centipoise) for a solid material concentration between 25 % and 35 % corresponding to a modified starch content ranging from 17.5 % to 33.25 % with respect to the total weight of the film-coating solution, these solutions or dispersions being intended for being sprayed on solid or semi-solid forms.

2. Solid film-forming compositions according to claim 1, **characterized in that** the modified starches are corn, wheat, potato, tapioca and rice starches.

3. Solid film-forming compositions according to claim 1, **characterized in that** the modified starches can be pre-hydrolyzed and/or pregelatinized.

4. Solid film-forming compositions according to claim 1, **characterized in that** the hydroxypropyl starch is a hydroxypropyl corn starch that may or may not be genetically modified.

5. Solid film-forming compositions according to claim 1, **characterized in that** the degree of substitution of hydroxypropyl starches is between 0.05 and 0.2.

6. Solid film-forming compositions according to claim 1, **characterized in that** the total hydroxypropyl starch content is between 70 and 95 % by weight with respect to the total weight of said compositions.

7. Solid film-forming compositions according to claim 1, **characterized in that** the fillers are microcrystalline celluloses, lactose, native starches and non-pregelatinized modified starches such as maltodextrins.

8. Solid film-forming compositions according to claim 1, **characterized in that** the plasticizers are hydrophilic molecules and/or fatty chain molecules.

9. Solid film-forming compositions according to claims 1 and 8, **characterized in that** the hydrophilic, fatty chain or liquid plasticizers can be bound to solid supports.

10. Solid film-forming compositions according to claims 1, 8 and 9, **characterized in that** the solid supports are minerals such as colloidal silica, levilite, magnesium aluminosilicate, and dibasic calcium phosphate.

11. Solid film-forming compositions according to claims 1 and 8, 9 and 10, **characterized in that** the percentage of plasticizers bonded to the solid support is between 1 % and 60 % by weight with respect to the total weight of the support.

12. Solid film-forming compositions according to claims 1, 8, 9, 10, 11 and 12, **characterized in that** the percentage of plasticizers bonded to the solid support is between 5 % and 40 % by weight with respect to the total weight of said film-forming compositions.

13. Solid film-forming compositions according to claims 1 and 8, **characterized in that** the hydrophilic plasticizers are glycerol, sorbitol, sorbitol anhydrides, polyoxyethylene glycol, triethylcitrate and propylene glycol.

14. Solid film-forming compositions according to claims 1 and 8, **characterized in that** the lipophilic plasticizers belong to the derivatives of glycol, glycerol, polyols, plant oils and diacid and alcohol diesters.

15. Solid film-forming compositions according to claims 1, 8 and 14, **characterized in that** the fatty chains of the lipophilic plasticizers belong to the class of fatty acids and alcohols such as stearic, cetostearic, caprylocapric, oleic, lauric, linolenic, linoleic, myristic, palmitic, behenic, undecylenic, and ricinoleic acids.

16. Solid film-forming compositions according to claim 1, **characterized in that** the dyes are natural or synthetic and may or may not be bound to an alumina support.

17. Solid film-forming compositions according to claims 1 and 16, **characterized in that** the dye content is, between 0.1 % and 30 % by weight with respect to the total weight of said compositions.

18. Solid film-forming compositions according to claim 1, **characterized in that** they contain odor maskers such as flavors with a marked flavor component.

19. Solid film-forming compositions according to claim 1, **characterized in that** they contain protectors against moisture, such as fatty acids and alcohols and silicone oils.

20. Solid film-forming compositions according to claim 1, **characterized in that** they contain gliding agents such as mica-titanium.

21. Solid film-forming compositions according to claims 27 to 29, **characterized in that** the concentrations of odor maskers, moisture protection agents and gliding agents are between 0.05 and 20 % by weight with respect to the total weight of said compositions.

22. Solid film-forming compositions according to all of claims 1 to 21, **characterized in that** the viscosity of said solutions or dispersions is between 150 and 900 cPs.
